# EUROPEAN PATENT APPLICATION

(11) **EP 4 848 778 A1**
(43) Date of publication of application: **02.12.2026**
(21) Application number: 24920417.3
(22) Date of filing: 23.01.2024
(51) Int. Cl.: H04W 16/24, H04W 36/04, H04W 76/25

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2024/001833
(87) International publication number: WO 2025/158528

(57) **Abstract**

A terminal according to one aspect of the present disclosure includes: a receiving section that receives one or more change indications for a cell whose physical range is changed; and a control section that controls transmission and reception of a signal using a plurality of the cells based on the change indication. According to one aspect of the present disclosure, suitable power control of a network can be performed, and more flexible communication can be performed.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, Rel. 20 or later), it has been studied that a user terminal (terminal, user equipment (UE)) performs cell-free communication that performs communication using a unit smaller than an existing cell.

However, specific studies on cell-free communication are not sufficient. In a case where this study is not sufficient, it is not possible to control the network (NW) according to the communication traffic or the like, and there is a possibility that improvement in the communication throughput is suppressed.

Therefore, an object of the present disclosure is to provide a terminal, a radio communication method, and a base station capable of performing suitable power control of a network and performing more flexible communication.

### Solution to Problem

A terminal according to one aspect of the present disclosure includes: a receiving section that receives one or more change indications for a cell whose physical range is changed; and a control section that controls transmission and reception of a signal using a plurality of the cells based on the change indication.

### Advantageous Effects of Invention

According to one aspect of the present disclosure, suitable power control of a network can be performed, and more flexible communication can be performed.

### Brief Description of Drawings

[FIG. 1] Figs. 1A and 1B are diagrams illustrating an outline of MIMO.
[FIG. 2] Fig. 2A is a diagram illustrating an outline of a cellular system. Fig. 2B is a diagram illustrating an outline of a cell-free system.
[FIG. 3] Figs. 3A to 3C are diagrams illustrating an example of an outline of each assumption of a cell-free configuration.
[FIG. 4] Fig. 4 is a diagram illustrating an example of a pattern of components (PCI components) of one PCI.
[FIG. 5] Figs. 5A to 5E are diagrams illustrating an example of a configuration of a first cell.
[FIG. 6] Fig. 6 is a diagram illustrating an example of a pattern of components (area components) of one area.
[FIG. 7] Fig. 7A is a diagram illustrating an example of a configuration of first/second cells according to option 1.1. Fig. 7B is a diagram illustrating an example of a configuration of the first/second cells according to option 1.2.
[FIG. 8] Fig. 8A is a diagram illustrating an example of a configuration of first/second cells according to option 2/4.1. Fig. 8B is a diagram illustrating an example of a configuration of first/second cells according to option 2/4.2.
[FIG. 9] Fig. 9A is a diagram illustrating an example of a configuration of first/second cells according to option 3/5.1. Fig. 9B is a diagram illustrating an example of a configuration of first/second cells according to option 3/5.2.
[FIG. 10] Fig. 10 is a diagram illustrating an example of a change of a configuration of a second cell.
[FIG. 11] Figs. 11A to 11C are diagrams illustrating an example of a configuration of a second cell according to option 0.3.
[FIG. 12] Fig. 12 is a diagram illustrating an example of area change in a case where a plurality of areas are used.
[Fig. 13] Fig. 13 is a diagram illustrating an example of area change according to option 1-1.
[Fig. 14] Fig. 14 is a diagram illustrating an example of area change according to option 1-2.
[Fig. 15] Fig. 15 is a diagram illustrating another example of area change according to option 1-2.
[Fig. 16] Fig. 16 is a diagram illustrating another example of area change according to option 1-2.
[FIG. 17] Fig. 17 is a diagram illustrating an example of a schematic configuration of a radio communication system according to an embodiment.
[FIG. 18] Fig. 18 is a diagram illustrating an example of a configuration of a base station according to an embodiment.
[FIG. 19] Fig. 19 is a diagram illustrating an example of a configuration of a user terminal according to an embodiment.
[FIG. 20] Fig. 20 is a diagram illustrating an example of a hardware configuration of a base station and a user terminal according to an embodiment.
[FIG. 21] Fig. 21 is a diagram illustrating an example of a vehicle according to an embodiment.

### Description of Embodiments

### (Cell-free Communication)

Existing radio communication systems (for example, 5G NR) adopted a cellular scheme in which, in principle, one cell is formed by one antenna/transmission and reception point (TRP). The area formed by the cell is fixed/static.

In addition, in an existing radio communication system (for example, Rel. 16 or later), distributed Multi Input Multi Output (Distributed MIMO, e.g., multi-TRPs utilizing a plurality of TRPs) that forms a communication area by coverage of a plurality of antennas/TRPs has been introduced. In the distributed MIMO, simultaneous communication using the plurality of antennas/TRPs and communication using one antenna/TRP can be performed.

By adopting distributed MIMO, a more preferable line-of-sight environment can be prepared, and performance related to MIMO can be improved.

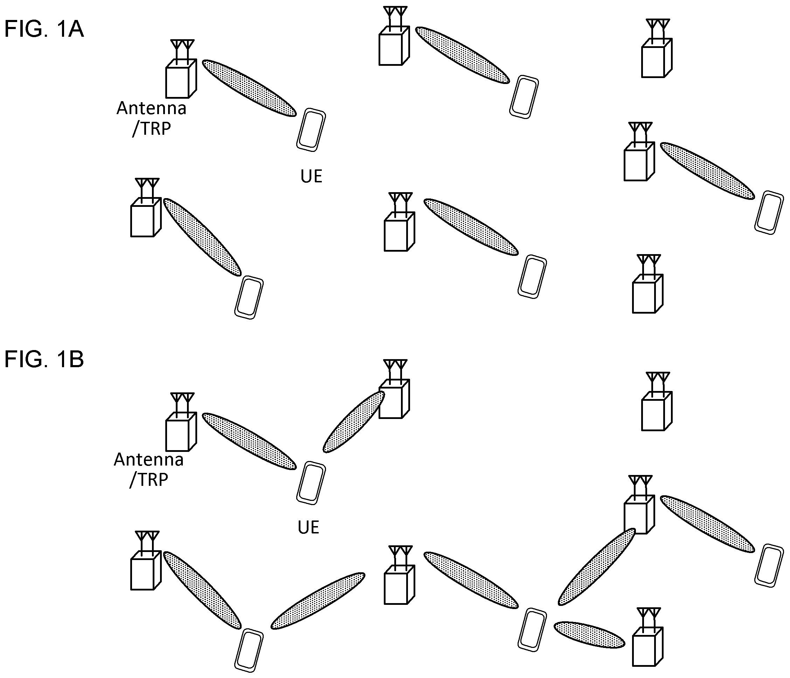

Figs. 1A and 1B are diagrams illustrating an outline of MIMO. Fig. 1A illustrates an example of Co-located MIMO. In Co-located MIMO, one UE communicates with one antenna/TRP.

On the other hand, Fig. 1B illustrates an example of distributed MIMO. In distributed MIMO, one UE communicates with multiple coordinated antennas/TRPs.

In a future radio communication system (for example, Rel. 20 or later), introduction of cell-free communication has been studied for the purpose of further improving performance and improving energy consumption efficiency through reduction of interference among a plurality of antennas/TRPs, improvement of a line-of-sight environment corresponding to utilization of a high frequency, improvement of frequency utilization efficiency of the entire system, and application of equal and high quality communication to each user.

The cell-free communication may be referred to as cell-free massive MIMO (mMIMO) or large-scale distributed MIMO (distributed MIMO, D-MIMO). The cell-free communication uses coherent coordination between a large number of access points. The cell-free communication may include at least one of ultra-dense deployment, scalable cooperation, user-centric clustering, super carrier aggregation, or analog fronthaul. A user plane for cell-free communication may perform more flexible scheduling than existing scheduling. A control plane for cell-free communication may maintain some form of cells to facilitate signaling.

In the cell-free communication, unlike a conventional cellular scheme, one area (which may be referred to as a cell/sub-cell or the like) may be formed by a plurality of antennas/TRPs. That is, the area may mean a cell that does not depend on the position of the antenna/TRP.

In the cell-free communication, a set of antennas/TRPs used for area formation may be changed in accordance with the demand of the UE. For example, the set of antennas/TRPs may be changed based on the number of UEs/the number of traffic/communication applications (for example, initial access/data communication/measurement/report, etc.) or the like that is not the coverage of the antennas/TRPs.

In other words, in the cell-free communication, the coverage among a plurality of antennas/TRPs may overlap.

In the cell-free communication, a direction in which a synchronization signal (for example, it may be referred to as a synchronization signal block (SSB), a synchronization signal/physical broadcast channel (SS/PBCH) block, or the like) is transmitted may be controlled in each antenna/TRP.

Further, in the cell-free communication, central unit (CU)/distributed unit (DU) may be virtualized for each antenna. Alternatively, each antenna may be managed only by the CU.

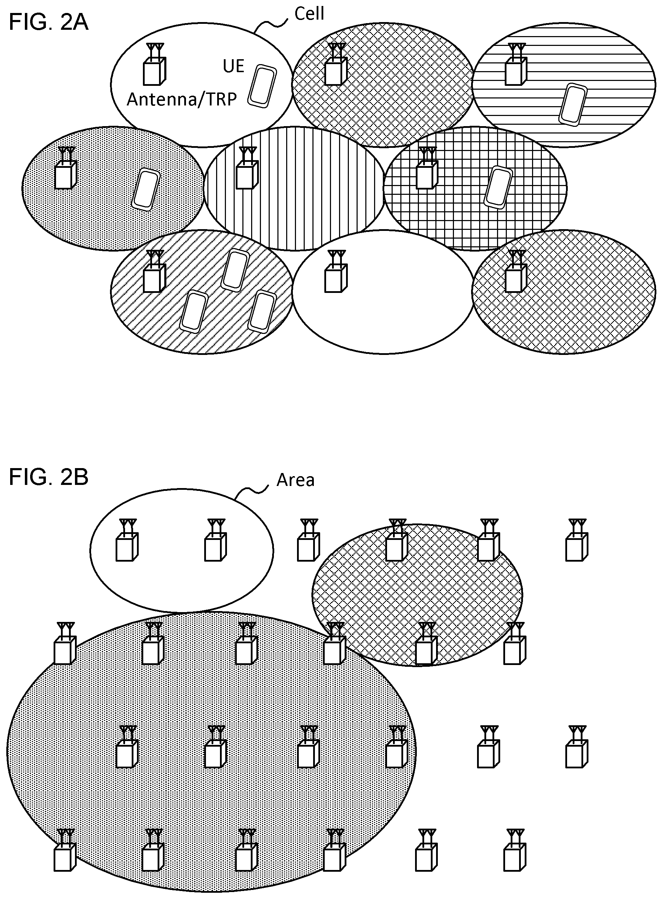

Fig. 2A is a diagram illustrating an outline of a cellular system. Fig. 2A illustrates a cell formed by each antenna/TRP, and the UE performs communication based on the cell.

On the other hand, Fig. 2B is a diagram illustrating an outline of the cell-free system. In the example illustrated in Fig. 2B, the installed antenna/TRP does not form a fixed/static cell in a cellular system. As illustrated in Fig. 2B, in the cell-free system, one or more antennas/TRPs form an area according to a condition. Therefore, in the cell-free system, each antenna/TRP may not need to correspond to the same physical cell ID, and areas among a plurality of antennas/TRPs may overlap.

The cell-free communication may be realized, for example, by adjusting a set of antennas/TRPs controlled by a central control unit (for example, CU).

In the cell-free system, a first cell (for example, it may be referred to as a cell/super cell/macro cell/large cell, or the like.) whose physical range is fixed, such as a cell in a 5G NR system, and a second cell (for example, it may be referred to as a sub-cell/area/micro cell/cell/small cell/second cell in the first cell, or the like) whose physical range semi-statically/dynamically fluctuates based on a condition may be formed.

For example, to be distinguished from the second cell, the first cell may be referred to as a super cell. In a case where the super cell is composed of a plurality of second cells, the second cell may have the same definition, operation, and coverage as an existing cell in NR. For example, in order to distinguish the second cell from the first cell, the second cell may be referred to as a sub-cell. In a case where super cell or the cell is composed of a plurality of sub-cells, the sub-cell may have a definition/operation/coverage similar to an existing cell in NR.

The first cell may be a cell newly defined in a future radio communication system, or a definition of a cell in an existing radio communication system may be reused.

For the configuration of the first cell and the second cell, the following Assumptions 1 and 2 are considered:
Assumption 1: The first cell includes a plurality of TRPs having one cell ID (physical cell ID (PCI)). The plurality of TRPs can perform transmission and reception in a coordinated manner.
Assumption 2: The first cell includes a plurality of TRPs (or sub-cells) with different cell IDs. The plurality of TRPs/sub-cells can perform transmission and reception in a coordinated manner.

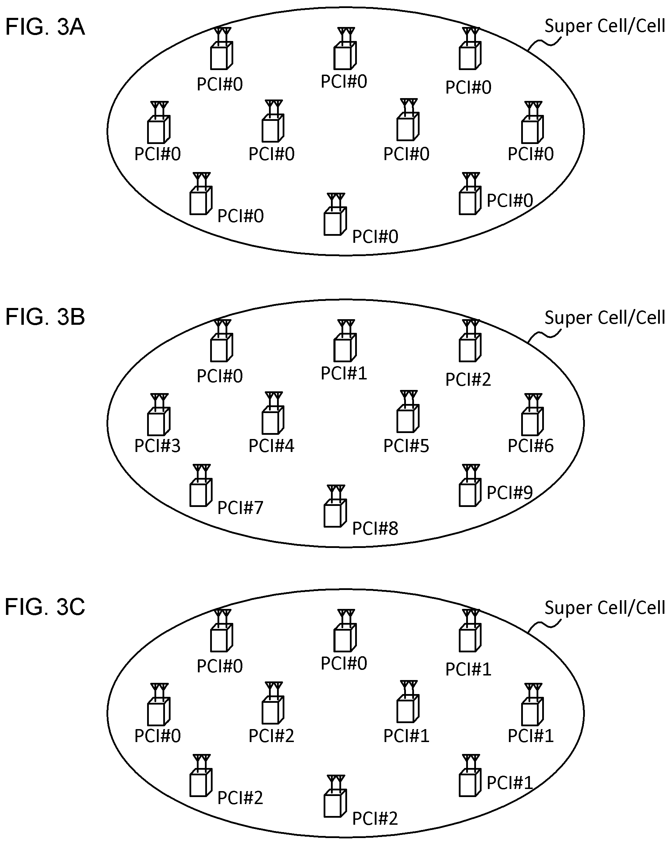

Fig. 3A is a diagram illustrating an example of an outline of Assumption 1 of the cell-free configuration. In the example illustrated in Fig. 3A, each TRP included in the first cell (super cell/cell) has the same PCI (PCI#0). The plurality of TRPs can perform communication with one UE in a coordinated manner.

Fig. 3B is a diagram illustrating an example of an outline of Assumption 2 of the cell-free configuration. In the example illustrated in Fig. 3B, each TRP included in the first cell (super cell/cell) has a different PCI (PCI#0 to PCI#9). The plurality of TRPs can perform communication with one UE in a coordinated manner.

Fig. 3C is a diagram illustrating another example of an outline of Assumption 2 of the cell-free configuration. In the example illustrated in Fig. 3C, a PCI is allocated to each TRP included in the first cell (super cell/cell). In the example illustrated in Fig. 3C, different from the example in Fig. 3B, the same PCI may correspond to a plurality of TRPs. The plurality of TRPs can perform communication with one UE in a coordinated manner.

Transmission/reception with TRP/sub-cell coordination may be based on at least one of the following several schemes supported in NR.
· Single TRP/sub-cell transmission with dynamic TRP/sub-cell switching (single TRP transmission)
· Joint transmission using a plurality of TRPs/sub-cells (multi-TRP joint transmission) The joint transmission may be based on single DCI or multi-DCI. The joint transmission may be non-coherent joint transmission (NCJT) or coherent joint transmission (CJT).

For the cell-free communication, assuming ideal backhaul and tight coordination, in a joint transmission manner, CJT may be prioritized over NCJT, and single-DCI-based joint transmission may be prioritized over multi-DCIs-based joint transmission.

### (Each Configuration in Cell-free Communication)

Hereinafter, an example of a configuration in cell-free communication will be described.

In the present disclosure, a cell whose physical range is fixed, a cell whose physical range is not changed, a first cell, a super cell, a cell, a macro cell, a large cell, and the like may be interchangeable with each other.

In the present disclosure, a cell whose physical range varies semi-statically/dynamically based on a condition, a cell to be changed, a second cell, a cell, an area, a micro cell, a small cell, a second cell in a first cell, and the like may be interchangeable with each other.

In the present disclosure, an area, a cell, a coverage, a range, and the like may be interchangeable with each other.

The first cell may include one or more second cells.

One second cell may be included in a plurality of first cells. The different first cells may share one second cell.

The different first cells may overlap or need not necessarily overlap.

The UE may transmit and receive a signal using the second cell included in the first cell. The UE may receive the configuration related to the second cell and transmit and receive the signal based on the configuration.

A component of one physical cell ID (PCI) may include at least one of the following:
· Number of TRPs per PCI
· TRP coverage layout
· Number of synchronization signals (for example, SSB, SS/PBCH block) for each TRP.

The configuration of the first cell may be associated with a component of the PCI. The first cell may be configured based on components of the PCI.

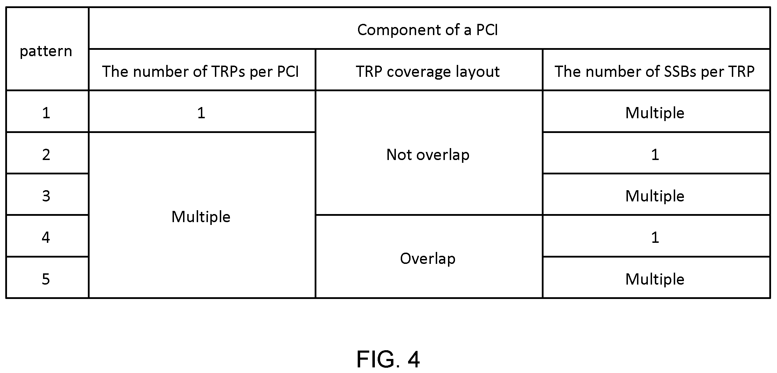

Fig. 4 is a diagram illustrating an example of a pattern of components (PCI components) of one PCI. As illustrated in Fig. 4, the PCI component includes the number of TRPs for each PCI, a TRP coverage layout, and the number of SSBs for each TRP.

As illustrated in Fig. 4, the number of TRPs for each PCI may take one or more values, the TRP coverage layout may take any of overlapping or not overlapping coverage of TRPs, and the number of SSBs for each TRP may take one or more values.

In the present disclosure, the pattern related to the PCI component may be any of patterns 1 to 5 illustrated in Fig. 4. The numbers of the patterns illustrated in Fig. 4 are all examples, and are not limited to this example. In addition, the PCI component may include elements other than the elements illustrated in Fig. 4.

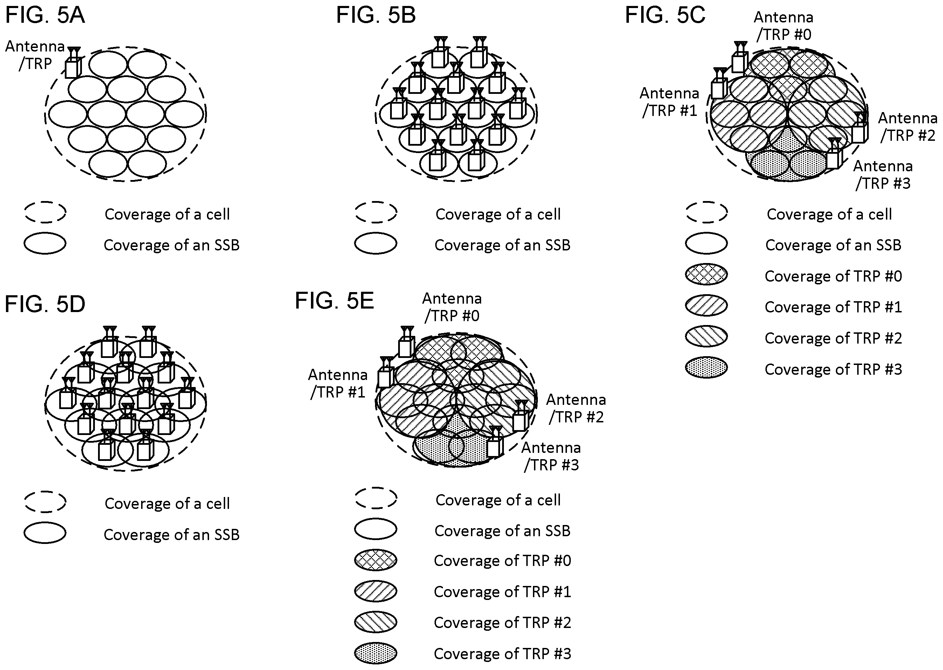

Fig. 5A is a diagram illustrating an example of a cell configuration according to pattern 1. In the cell configuration illustrated in Fig. 5A, the number of TRPs included in PCI/cell is one, the TRP coverage does not overlap, and the number of SSBs for each TRP is two or more. Note that, in the cell configuration in Fig. 5A, the coverage of the TRP may match the coverage of the cell (first cell) (therefore, the coverage of the TRP is not illustrated in Fig. 5A).

For example, an inter-cell multi-TRP operation can be performed using the cell configuration according to pattern 1 as illustrated in Fig. 5A.

Fig. 5B is a diagram illustrating an example of a cell configuration according to pattern 2. In the cell configuration illustrated in Fig. 5B, there are a plurality of TRPs included in PCI/cell, the TRP coverage does not overlap, and the number of SSBs for each TRP is one. Note that, in the cell configuration in Fig. 5B, the coverage of the TRP may match the coverage of the SSB (therefore, the coverage of the TRP is not illustrated in Fig. 5B).

For example, the inter-cell multi-TRP operation can be performed using the cell configuration according to pattern 2 as illustrated in Fig. 5B.

Fig. 5C is a diagram illustrating an example of a cell configuration according to pattern 3. In the cell configuration illustrated in Fig. 5C, the number of TRPs included in PCI/cell is plural, the TRP coverage does not overlap, and there are a plurality of SSBs for each TRP.

For example, the inter-cell multi-TRP operation can be performed using the cell configuration according to pattern 3 as illustrated in Fig. 5C.

Fig. 5D is a diagram illustrating an example of a cell configuration according to pattern 4. In the cell configuration illustrated in Fig. 5D, the number of TRPs included in PCI/cell is plural, the TRP coverage overlaps, and the number of SSBs for each TRP is one. Note that, in the cell configuration in Fig. 5D, the coverage of the TRP may match the coverage of the SSB (therefore, the coverage of the TRP is not illustrated in Fig. 5D).

For example, the inter-cell/intra-cell multi-TRP operation can be performed using the cell configuration according to pattern 4 as illustrated in Fig. 5D.

Fig. 5E is a diagram illustrating an example of a cell configuration according to pattern 5. In the cell configuration illustrated in Fig. 5E, the number of TRPs included in PCI/cell is plural, the TRP coverage overlaps, and there are a plurality of SSBs for each TRP.

For example, the inter-cell/intra-cell multi-TRP operation can be performed using the cell configuration according to pattern 5 as illustrated in Fig. 5E.

Further, a component of one second cell (for example, the area) may include at least one of the following:
· Number of CUs/DUs per second cell
· Number of PCIs per second cell
· Number of TRPs per second cell
· Number of synchronization signals (for example, SSB, SS/PBCH block) for each second cell.

The configuration of the second cell may be associated with a component of the second cell. The second cell may be configured based on a component of the second cell.

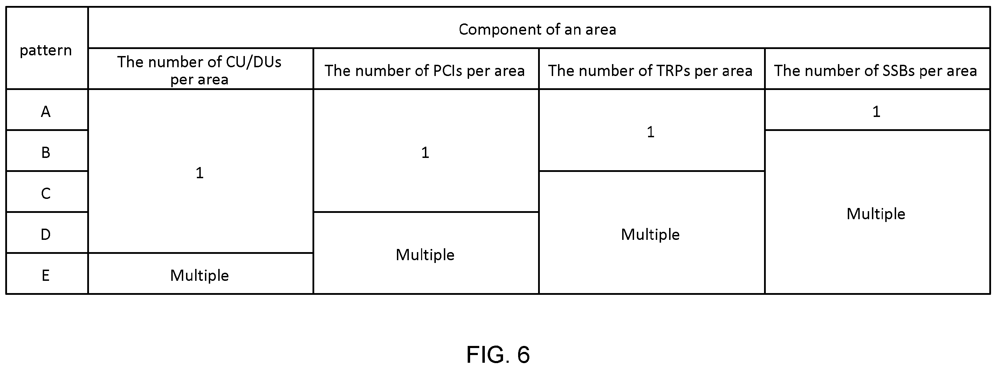

Fig. 6 is a diagram illustrating an example of a pattern of components (area components) of one area. As illustrated in Fig. 6, the area component includes the number of CUs/DUs for each area, the number of PCIs for each area, the number of TRPs for each area, and the number of synchronization signals for each area.

As illustrated in Fig. 6, the number of CUs/DUs for each second cell, the number of PCIs for each second cell, the number of TRPs for each second cell, and the number of synchronization signals for each second cell can each take one or more values.

In the present disclosure, the pattern related to the area component may be any of patterns A to E illustrated in Fig. 6. Each symbol of the pattern illustrated in Fig. 6 is an example and is not limited to this example. In addition, the area component may include elements other than the elements illustrated in Fig. 6.

For example, the second cell according to patterns A, D, and E may be configurable in any first cell (cell configuration).

Hereinafter, configurations related to the first cell/the second cell in a case where different cells overlap and a case where different cells do not overlap will be described. At least one of the configurations related to the first cell/the second cell described below may be defined/set.

### <<Configuration of First Cell/Second Cell According to Pattern 1>>

### <<<Option 1.1>>>

Different first cells need not necessarily overlap (physically).

In this option, the second cell according to at least one of patterns A, B, D, and E described above may be configured.

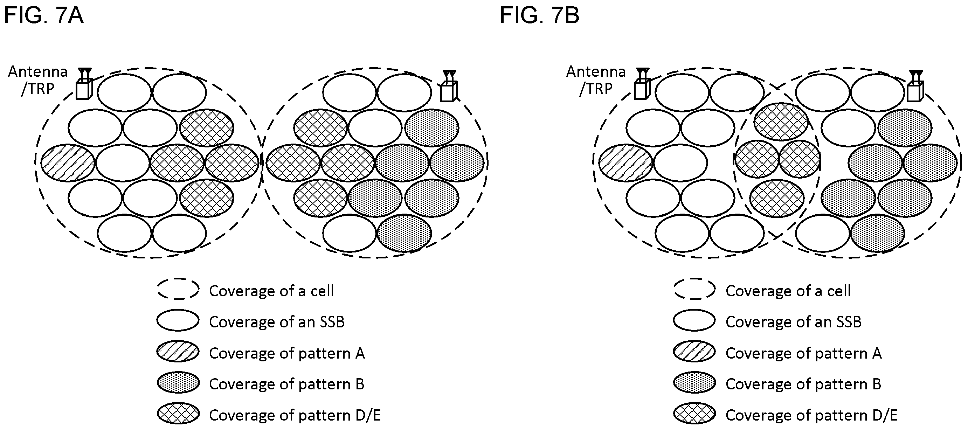

Fig. 7A is a diagram illustrating an example of a configuration of first/second cells according to option 1.1. In the example illustrated in Fig. 7A, two different cells (first cells) do not overlap.

In the example illustrated in Fig. 7A, the second cell (the coverage of the second cell) according to pattern A, the second cell (the coverage of the second cell) according to pattern B, and the second cell (the coverage of the second cell) according to pattern D/E are illustrated.

Note that, in the cell configuration in Fig. 7A, the coverage of the TRP may match the coverage of the cell (first cell) (therefore, the coverage of the TRP is not illustrated in Fig. 7A).

In the configuration of this option, only a single TRP operation may be operable in each second cell.

According to the configuration of the present option, more preferable network energy saving (NES) can be performed.

### <<<Option 1.2>>>

Different first cells may overlap (physically).

In this option, the second cell according to at least one of patterns A, B, D, and E described above may be configured.

Fig. 7B is a diagram illustrating an example of a configuration of the first/second cells according to option 1.2. In the example illustrated in Fig. 7B, two different cells (first cells) overlap.

In the example illustrated in Fig. 7B, the second cell (the coverage of the second cell) according to pattern A, the second cell (the coverage of the second cell) according to pattern B, and the second cell (the coverage of the second cell) according to pattern D/E are illustrated.

Note that, in the cell configuration in Fig. 7B, the coverage of the TRP may match the coverage of the cell (first cell) (therefore, the coverage of the TRP is not illustrated in Fig. 7B).

In the configuration of this option, for example, the inter-cell multi-TRP operation may be operable in the second cell according to pattern D/E.

According to the configuration of this option, for example, the uniformity of communication quality can be enhanced by increasing the coverage in the overlapping cells.

In addition, according to the configuration of this option, for example, the frequency utilization efficiency can be increased by reducing the coverage in the overlapping cells.

In addition, in the configuration of this option, by reusing the antenna/TRP of the existing NR specification, it is possible to operate by changing the antenna/TRP device so as to overlap the coverage developed in the existing NR, and it is possible to reduce the station installation cost.

### <<Configuration of First Cell/Second Cell According to Pattern 2/Pattern 4>>

### <<<Option 2/4.1>>>

Different first cells need not necessarily overlap (physically).

In this option, the second cell according to at least one of patterns A, C, D, and E may be configured.

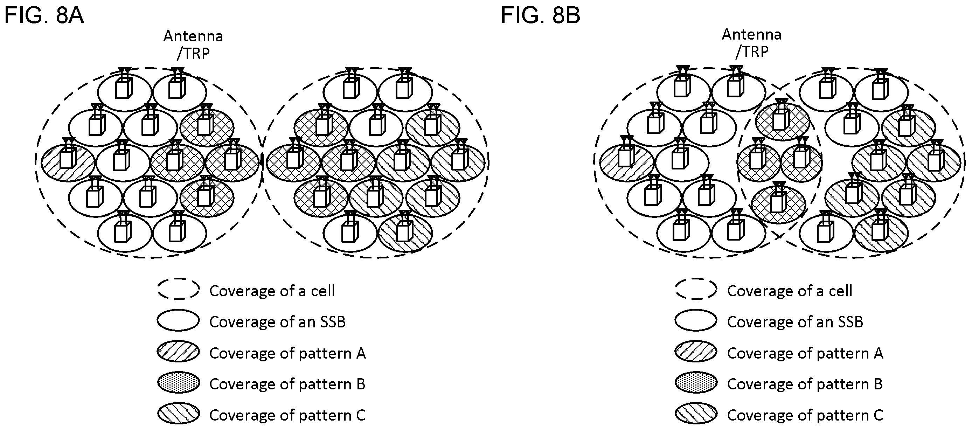

Fig. 8A is a diagram illustrating an example of a configuration of first/second cells according to option 2/4.1. In the example illustrated in Fig. 8A, two different cells (first cells) do not overlap.

In the example illustrated in Fig. 8A, the second cell (the coverage of the second cell) according to pattern A, the second cell (the coverage of the second cell) according to pattern C, and the second cell (the coverage of the second cell) according to pattern D/E are illustrated.

Note that, in the cell configuration in Fig. 8A, the coverage of the TRP may match the coverage of the SSB (therefore, the coverage of the TRP is not illustrated in Fig. 8A).

In addition, in the configuration of this option, only a single TRP operation may be operable in each second cell.

According to the configuration of this option, for example, by increasing the number of TRPs per first cell, it is possible to improve uniformity of communication quality and frequency utilization efficiency.

### <<<Option 2/4.2>>>

Different first cells may overlap (physically).

In this option, the second cell according to at least one of patterns A, C, D, and E may be configured.

Fig. 8B is a diagram illustrating an example of a configuration of first/second cells according to option 2/4.2. In the example illustrated in Fig. 8B, two different cells (first cells) overlap.

In the example illustrated in Fig. 8B, the second cell (the coverage of the second cell) according to pattern A, the second cell (the coverage of the second cell) according to pattern C, and the second cell (the coverage of the second cell) according to pattern D/E are illustrated.

Note that, in the cell configuration in Fig. 8B, the coverage of the TRP may match the coverage of the SSB (therefore, the coverage of the TRP is not illustrated in Fig. 8B).

In the configuration of this option, for example, the inter-cell multi-TRP operation may be operable in the second cell according to pattern D/E.

According to the configuration of this option, for example, the uniformity of communication quality can be enhanced by increasing the coverage in the overlapping cells.

In addition, according to the configuration of this option, for example, the frequency utilization efficiency can be increased by reducing the coverage in the overlapping cells.

Further, according to the configuration of this option, for example, by increasing the number of TRPs per first cell, it is possible to improve uniformity of communication quality and frequency utilization efficiency.

### <<Configuration of First Cell/Second Cell According to Pattern 3/Pattern 5>>

### <<<Option 3/5.1>>>

Different first cells need not necessarily overlap (physically).

In this option, the second cell according to at least one of patterns A, B, C, D, and E may be configured.

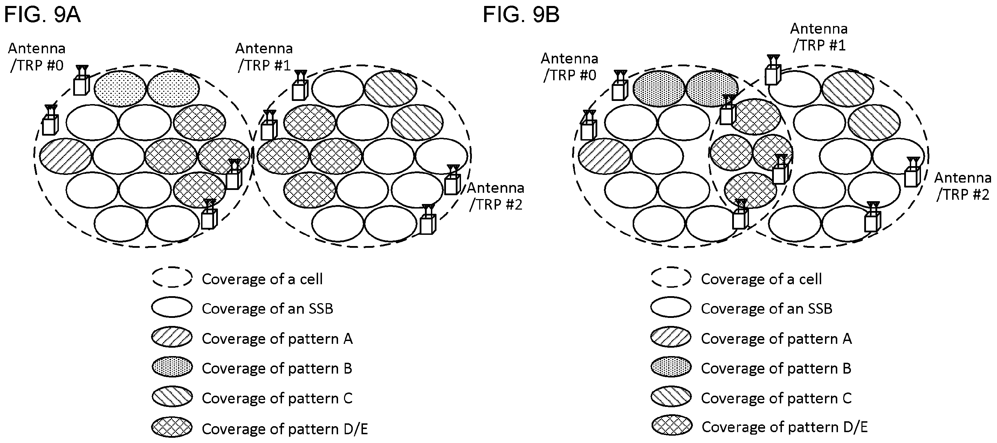

Fig. 9A is a diagram illustrating an example of a configuration of first/second cells according to option 3/5.1. In the example illustrated in Fig. 9A, two different cells (first cells) do not overlap.

In the example illustrated in Fig. 9A, the second cell (the coverage of the second cell) according to pattern A, the second cell (the coverage of the second cell) according to pattern B, the second cell (the coverage of the second cell) according to pattern C, and the second cell (the coverage of the second cell) according to pattern D/E are illustrated.

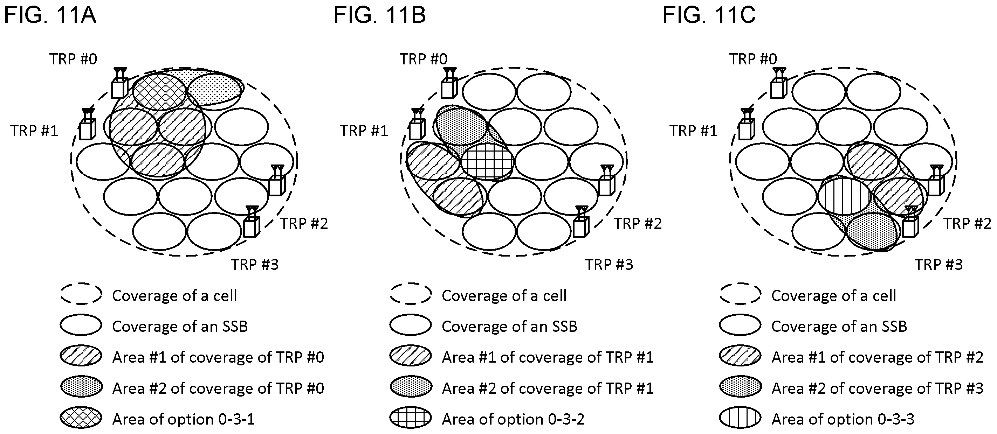

Note that an example is illustrated in which the second cell according to pattern B illustrated in Fig. 9A is included only in the coverage of antenna/TRP #0. In addition, an example is illustrated in which the second cell according to pattern C illustrated in Fig. 11A corresponds to an overlapping portion between the coverage of antenna/TRP #1 and the coverage of antenna/TRP #2.

In the configuration of this option, a single TRP operation may be operable in each second cell.

Further, in the configuration of this option, the intra-cell multi-TRP operation may be operable in the second cell in which the coverages of the plurality of TRPs overlap. With this configuration, the frequency utilization efficiency can be improved.

Further, according to the configuration of this option, for example, by increasing the number of TRPs per first cell, it is possible to improve uniformity of communication quality and frequency utilization efficiency.

### <<<Option 3/5.2>>>

Different first cells may overlap (physically).

In this option, the second cell according to at least one of patterns A, B, C, D, and E may be configured.

Fig. 9B is a diagram illustrating an example of a configuration of first/second cells according to option 3/5.2. In the example illustrated in Fig. 9B, two different cells (first cells) overlap.

In the example illustrated in Fig. 9B, the second cell (the coverage of the second cell) according to pattern A, the second cell (the coverage of the second cell) according to pattern B, the second cell (the coverage of the second cell) according to pattern C, and the second cell (the coverage of the second cell) according to pattern D/E are illustrated.

Note that an example is illustrated in which the second cell according to pattern B illustrated in Fig. 9B is included only in the coverage of antenna/TRP #0. In addition, an example is illustrated in which the second cell according to pattern C illustrated in Fig. 9B corresponds to an overlapping portion between the coverage of antenna/TRP #1 and the coverage of antenna/TRP #2.

In the configuration of this option, for example, the inter-cell multi-TRP operation may be operable in the second cell according to pattern D/E.

Further, in the configuration of this option, in the case of the cell configuration of pattern 5, the intra-cell multi-TRP operation may be operable. With this configuration, the frequency utilization efficiency can be improved.

According to the configuration of this option, for example, the uniformity of the communication quality and the frequency utilization efficiency can be enhanced as compared with the above-described option 1.2, and the station installation cost can be suppressed as compared with option 2/4.2.

### <<Flexibility of Second Cell>>

The second cell may be configured/reconfigured based on a certain condition/trigger. An example of the definition of the second cell will be described in detail below.

The configuration of the second cell may be changed/updated based on a certain condition/trigger.

The certain condition/trigger may be, for example, at least one of a condition/trigger related to the distribution of the UE, a condition/trigger related to traffic, a condition/trigger related to particular events, and a condition/trigger based on certain information (for example, at least one of the information regarding the time, the position information regarding the UE/TRP, and the information regarding a period).

For example, the condition/trigger related to the distribution of UEs may be a condition/trigger based on the distribution/number of UEs in the first cell/the second cell.

For example, the condition/trigger related to the traffic may be a condition/trigger based on at least one of the traffic volume/communication volume in the first cell/the second cell, the traffic volume/communication volume for the TRP, and the traffic volume/communication volume for the SSB.

For example, particular events related to a condition/trigger for a certain event may be predefined in a specification or may depend on the implementation of the NW.

For example, the condition/trigger based on the certain information may be a condition/trigger based on at least one of information regarding time, information regarding a certain timer, position information regarding UE/TRP, and information regarding a period (for example, date and time/day of the week/climate, and the like).

The second cell may be statically configured based on the certain condition/trigger or regardless of the certain condition.

The second cell may be configured dynamically/semi-statically based on the certain condition/trigger. With this configuration, the power consumption in the NW can be reduced, and the communication quality can be provided according to the demand of the UE.

A restriction regarding the change/update of the second cell may be defined. The NW may determine not to change/update the second cell in certain cases.

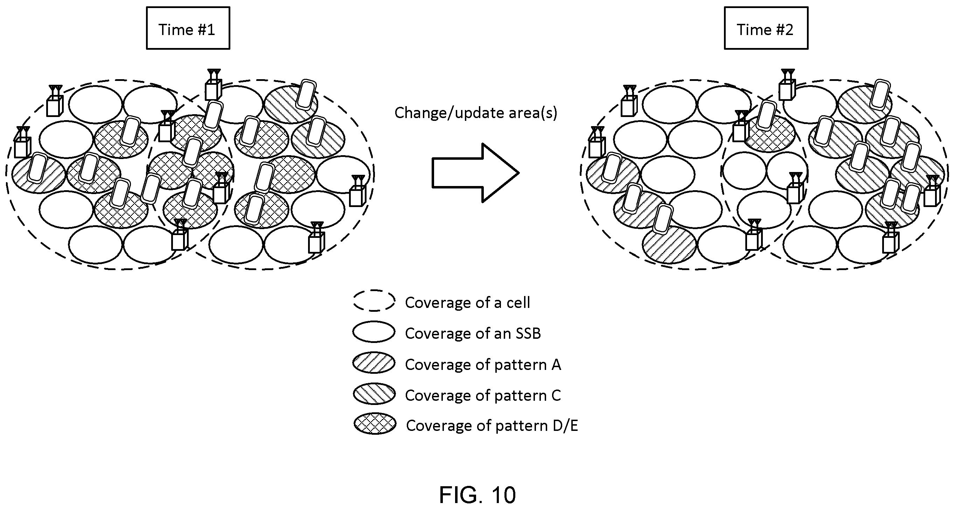

Fig. 10 is a diagram illustrating an example of a change in the configuration of the second cell. The example illustrated in Fig. 10 illustrates a case where the range of the second cell (area) is changed in accordance with changes in the distribution of the UEs and the time (from time #1 to time #2).

### <<Definition of Second Cell>>

An example of the configuration/definition of the second cell will be described below.

As for the configuration/definition of the second cell, at least one of the following options 0.1 and 0.2 may be combined with the above description of the second cell as appropriate without contradiction.

### <<<Option 0.1>>>

The second cell may be configured by one cell (first cell)/PCI.

For example, the second cell may be identified by PCI (as in the existing NR). For example, the second cell may include a PCI as in the existing NR.

For example, the PCI may be defined similarly to the PCI defined in the existing NR.

This option may correspond to the above Assumption 1.

### [[Option 0.1.1]]

The second cell may be configured by one TRP for one cell. In other words, one second cell may correspond to one TRP.

### [[[Option 0.1.1.1]]]

The second cell may be configured by one synchronization signal for one cell (e.g., at least one of an SSB and an SS/PBCH block). In other words, one second cell may correspond to one synchronization signal. Such a configuration corresponds to, for example, the second cell according to pattern A in at least one of options 1.1, 1.2, 2/4.1, 2/4.2, 3/5.1, and 3/5.2 described above.

### [[[Option 0.1.1.2]]]

The second cell may be configured by a plurality of synchronization signals for one cell (e.g., some of synchronization signals for one cell). In other words, one second cell may correspond to a plurality of synchronization signals (some of the synchronization signals for one cell). Such a configuration corresponds to, for example, the second cell according to pattern B in at least one of options 1.1, 1.2, 3/5.1, and 3/5.2 described above.

### [[[Option 0.1.1.3]]]

The second cell may be configured by a plurality of synchronization signals for one cell (e.g., all synchronization signals for one cell). In other words, one second cell may correspond to a plurality of synchronization signals (all synchronization signals for one cell). Such a configuration corresponds to, for example, the second cell according to pattern B in at least one of options 1.1 and 1.2 described above.

### [[Option 0.1.2]]

The second cell may be configured by a plurality of TRPs for one cell (e.g., some of the TRPs for one cell). In other words, one second cell may correspond to a plurality of TRPs (some of the TRPs for one cell).

### [[[Option 0.1.2.1]]]

The second cell may be configured by a plurality of synchronization signals for one cell (e.g., some of synchronization signals for one cell). In other words, one second cell may correspond to a plurality of synchronization signals (some of the synchronization signals for one cell). Such a configuration corresponds to, for example, the second cell according to pattern C in at least one of options 2/4.1, 2/4.2, 3/5.1, and 3/5.2 described above.

### [[Option 0.1.3]]

The second cell may be configured by a plurality of TRPs for one cell (e.g., all TRPs for one cell). In other words, one second cell may correspond to a plurality of TRPs (all TRPs for one cell).

### [[[Option 0.1.3.1]]]

The second cell may be configured by one synchronization signal for one cell (e.g., at least one of an SSB and an SS/PBCH block). In other words, one second cell may correspond to one synchronization signal. Such a configuration corresponds to, for example, the second cell according to pattern A in at least one of options 1.1 and 1.2 described above.

### [[[Option 0.1.3.2]]]

The second cell may be configured by a plurality of synchronization signals for one cell (e.g., some of synchronization signals for one cell). In other words, one second cell may correspond to a plurality of synchronization signals (some of the synchronization signals for one cell). Such a configuration corresponds to, for example, the second cell according to pattern B in at least one of options 1.1 and 1.2 described above and the second cell according to pattern C in at least one of options 3/5.1 and 3/5.2 described above.

### [[[Option 0.1.3.3]]]

The second cell may be configured by a plurality of synchronization signals for one cell (e.g., all synchronization signals for one cell). In other words, one second cell may correspond to a plurality of synchronization signals (all synchronization signals for one cell). Such a configuration corresponds to, for example, a second cell according to pattern B in at least one of options 1.1 and 1.2 described above, and a second cell according to pattern C in at least one of options 2/4.1, 2/4.2, 3/5.1, and 3/5.2 described above.

### <<<Option 0.2>>>

The second cell may be configured by a plurality of cells (first cells)/PCI.

For example, the PCI may be defined similarly to the PCI defined in the existing NR.

This option may correspond to the above Assumption 2.

### [[Option 0.2.1]]

The second cell may be configured by a plurality of TRPs. In other words, one second cell may correspond to a plurality of TRPs.

For example, the TRP may be defined similarly to the TRP defined in the existing NR.

### [[[Option 0.2.1.1]]]

The second cell may be configured by a plurality of synchronization signals. In other words, one second cell may correspond to a plurality of synchronization signals. Such a configuration corresponds to, for example, a second cell according to pattern D/E in at least one of options 1.1, 1.2, 2/4.1, 2/4.2, 3/5.1, and 3/5.2 described above.

Each of the above options may be selected/determined based on the above conditions/trigger (for example, conditions/triggers based on time/number of UEs/traffic, etc.).

The change/update of each option described above may be configured/indicated/notified to the UE based on at least one of system information (for example, SIB/MIB), higher layer signaling (RRC parameter/MAC CE), and DCI.

The change/update of each of the above options may be performed based on the above conditions/trigger (for example, a timer/event), or may be performed based on the implementation of the NW/UE.

The second cell may be identified by a certain ID.

The certain ID may have a fixed value.

Furthermore, the certain ID may be a virtual ID. In other words, the certain ID is an ID that can be dynamically changed, and the configuration/range/position of the second cell may be dynamically changed with the change of the ID.

Common/dedicated configuration/parameters with respect to the plurality of second cells may be notified to the UE. The configuration/parameter may be notified using, for example, a higher layer (RRC) parameter.

The configuration/parameter may be, for example, a configuration/parameter related to PCI/TRP/SSB.

The second cell may be used for a certain purpose/property. In other words, the second cell may be defined/configured/identified with a certain purpose/property.

The certain purpose may be, for example, at least one of a control plane, a user plane, paging, measurement, reporting, measurement reporting, beam indication/activation, transmission and reception of certain channels/signals (for example, PUCCH/PUSCH/SRS/PDCCH/PDSCH/CSI-RS), initial access, on-demand signals, and trigger signals for handover.

The certain property may be, for example, at least one of a Doppler shift, a Doppler spread, an average delay, an average spread, a band/component carrier, a subcarrier spacing, a TCI state, a spatial relationship, a QCL type, a timing advance value, downlink transmission timing, and an RNTI.

The number of PCIs/TRPs/SSBs in one second cell (for example, the maximum number) may be predefined in the specification, may be configured/indicated/notified to the UE by using higher layer signaling (RRC/MAC CE)/DCI, may be determined based on reporting of UE capability information, or may be determined by combining at least two of them.

The second cells may be arranged in succession (physically/spatially). In addition, the second cells may be arranged discontinuously (physically/spatially) from each other.

### <<Sharing between Second Cells>>

### <<<Option 0.3.1>>>

Between a plurality of second cells, a synchronization signal (e.g., at least one of an SSB and an SS/PBCH block) may be shared. The UE may assume that it can receive the same (shared/common) synchronization signal in a plurality of different second cells.

In this case, the information included in the synchronization signal may be configurable as information specific to the second cell.

In option 0.3.1, the TRP/PCI may be shared between the plurality of second cells.

In option 0.3.1, among the plurality of second cells, at least one of an ID (for example, SSB ID/SSB index/candidate SSB index) related to the same synchronization signal, an ID (for example, at least one of an ID for identifying a TRP, a TRP ID, and a CORESET pool index) related to the same TRP, and the same PCI may be used.

Fig. 11A is a diagram illustrating an example of an area according to option 0.3.1. Fig. 11A illustrates one cell including TRP #0 to TRP #3. In the example illustrated in Fig. 11A, area #1 and area #2 are formed within the coverage of TRP #0. The areas in which area #1 and area #2 overlap have the same SSB coverage. That is, in the overlapping area, area #1 and area #2 can share the same SSB/TRP/PCI.

By enabling the configuration as in option 0.3.1, the most flexible configuration of the second cell becomes possible.

### <<<Option 0.3.2>>>

Between a plurality of second cells, a synchronization signal does not necessarily need to be shared. The UE may assume that it does not receive the same (shared/common) synchronization signal in the plurality of different second cells.

In this case, the information included in the synchronization signal may be configurable as information specific to the second cell. In addition, in this case, the second cell may be identified by using an index related to the synchronization signal.

In option 0.3.2, the TRP/PCI may be shared between the plurality of second cells.

In option 0.3.2, between the plurality of second cells, at least one of an ID (for example, at least one of an ID for identifying a TRP, a TRP ID, and a CORESET pool index) related to the same TRP and the same PCI may be used.

Fig. 11B is a diagram illustrating an example of an area according to option 0.3.2. Fig. 11B illustrates one cell including TRP #0 to TRP #3. In the example illustrated in Fig. 11B, area #1 and area #2 are formed within the coverage of TRP #1. Since area #1 and area #2 do not overlap each other, area #1 and area #2 have different SSB coverages. Therefore, the areas included in area #1 or area #2 do not share the same SSB but can share the same TRP/PCI.

In a configuration such as option 0.3.2, the maximum number of second cells in the first cell may be a number of synchronization signals (SSB/SSB coverage). Also, in a case where the second cell spans multiple SSB coverages, the maximum number of second cells in the first cell may be the number of SSBs (SSB groups) spanning across.

### <<<Option 0.3.3>>>

Between a plurality of second cells, a synchronization signal and a TRP do not necessarily need to be shared. The UE may assume that it does not perform transmission/reception of a signal with respect to the same TRP and does not perform reception of the same (shared/common) synchronization signal in the plurality of different second cells.

In this case, the information included in the synchronization signal may be configurable as information specific to the second cell. In addition, in this case, the second cell may be identified by using an index related to the synchronization signal. In this case, the second cell may be identified by using an ID related to the TRP (an ID for identifying the TRP).

In option 0.3.3, a PCI may be shared between a plurality of second cells.

In option 0.3.3, the same PCI may be used between a plurality of second cells.

Fig. 11C is a diagram illustrating an example of an area according to option 0.3.3. Fig. 11C illustrates one cell including TRP #0 to TRP #3. In the example illustrated in Fig. 11C, area #1 is formed within the coverage of TRP #2, and area #2 is formed within the coverage of TRP #3. Since area #1 and area #2 do not overlap each other, area #1 and area #2 have different SSB coverages. Therefore, the areas included in area #1 or area #2 do not share the same SSB, do not share the same TRP, and can share the same PCI.

In a configuration such as option 0.3.3, the maximum number of second cells in the first cell may be the number of TRPs. In addition, in a case where second cell straddles a plurality of TRPs, the maximum number of second cells in the first cell may be the number of TRPs (TRP groups) straddled by the second cell.

### <<<Option 0.3.4>>>

The synchronization signal, the TRP, and the PCI may not need to be shared between the plurality of second cells. The UE may assume that it does not perform transmission/reception of a signal with respect to the same cell (first cell/PCI), transmission/reception of the signal with respect to the same TRP, and reception of the same (shared/common) synchronization signal in the plurality of different second cells.

In this case, the information included in the synchronization signal may be configurable as information specific to the second cell. In addition, in this case, the second cell may be identified by using an index related to the synchronization signal. Further, in this case, the second cell may be identified using an ID related to a TRP (an ID for identifying a TRP). In this case, the second cell may be identified by using the PCI.

In a configuration such as option 0.3.4, the maximum number of second cells in the first cell may be one. In addition, in a case where second cell straddles the plurality of first cells, the maximum number of entire second cells may be the number of first cells/PCI (PCI group) straddled by the second cell.

Each of the above options may be selected/determined based on the above conditions/trigger (for example, conditions/triggers based on time/number of UEs/traffic, etc.).

The change/update of each option described above may be configured/indicated/notified to the UE based on at least one of system information (for example, SIB/MIB), higher layer signaling (RRC parameter/MAC CE), and DCI.

The change/update of each of the above options may be performed based on the above conditions/trigger (for example, a timer/event), or may be performed based on the implementation of the NW/UE.

The ID (for example, at least one of an ID related to a synchronization signal, an ID related to a TRP, and a PCI) in each of the above options may be a global (for example, common to all NWs) ID or a local (for example, unique in some NWs) ID.

The number of the plurality of second cells (for example, the maximum number) using at least one of the ID related to the same synchronization signal, the ID related to the same TRP, and the same PCI may be predefined in the specification, may be configured/indicated/notified to the UE by using higher layer signaling (RRC/MAC CE)/DCI, may be determined based on reporting of UE capability information, or may be determined by combining at least two of them.

### (Analysis)

In the cell-free configuration as described above, it is considered that the UE performs communication by carrier aggregation (CA) using a plurality of areas.

In the present disclosure, an existing CA (as defined in up to Rel. 18) may be referred to as a first CA, and a CA using a plurality of areas may be referred to as a second CA.

In the second CA, one area may correspond to one component carrier (CC).

In the second CA, the UE may transmit and receive signals using one primary area (PArea) and one or more secondary areas (SAreas).

The connection with the SArea may be made based on information received from the PArea.

In the second CA, one or more CCs may be included in a band.

In a scenario of the second CA, in a case where the UE uses a plurality of CCs (areas), studies on how to operate when area change is made are not sufficient.

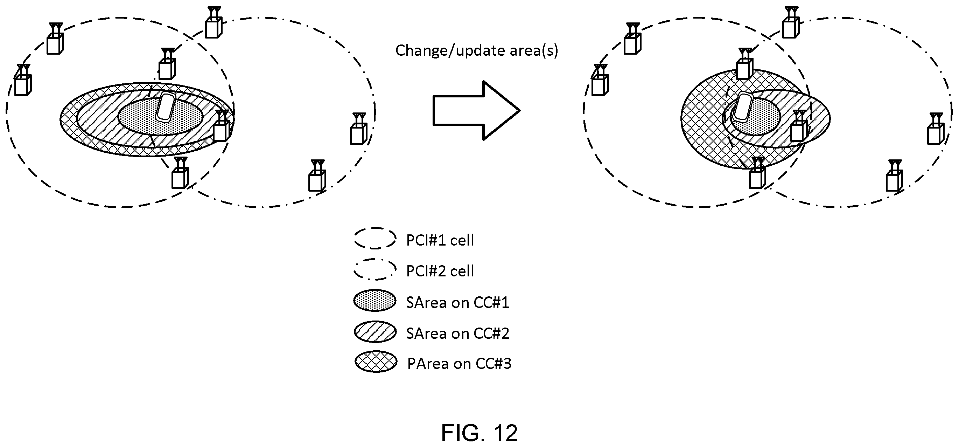

Fig. 12 is a diagram illustrating an example of area change in a case where the plurality of areas are used. In the example illustrated in Fig. 12, the UE uses SArea on CC#1, SArea on CC#2, and PArea on CC#3. CC#1 and CC#2 may be included in band #1, and CC#3 may be included in band #2.

As in the example illustrated in Fig. 12, the area can be changed based on the certain condition or the like. In this case, studies on how the UE/NW operates are not sufficient.

If such studies are not sufficient, appropriate communication using a cell/area that is dynamically/semi-statically changed is incapable of being performed, and there is a concern that improvement in communication throughput may be suppressed.

Therefore, the present inventors have conceived a method for solving the above problem.

Hereinafter, embodiments according to the present disclosure will be described in detail with reference to the drawings. The radio communication method according to each of the embodiments may be applied independently, or may be applied in combination with others.

### (Various Interchangeable Replacements)

In the present disclosure, a word surrounded by "()" in a sentence may indicate a description (for example, a description of the spelling), rephrasing, a specific example, a supplementary description, or the like of the immediately preceding word. Furthermore, in the present disclosure, the meaning of the entire sentence including the words surrounded by "[]" in the sentence may be interpreted, or the meaning of the entire sentence may be interpreted without including (ignoring) the words. It should be noted that "()" and "[]" may be used in applications/meanings other than these.

In the present disclosure, "A/B" and "at least one of A or B" may be interchangeable with each other. Furthermore, in the present disclosure, "A/B/C" may mean "at least one of A, B, and C".

In the present disclosure, notify, activate, deactivate, instruct (or indicate), select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, a higher layer parameter, a field, an information element (IE), a configuration, and the like may be interchangeable with each other. In the present disclosure, a medium access control control element (MAC control element (CE)), an update command, an activation/deactivation command, and the like may be interchangeable with each other.

In the present disclosure, higher layer signaling may be, for example, any of radio resource control (RRC) signaling, medium access control (MAC) signaling, broadcast information, other messages (for example, a message from a core network, such as a positioning protocol (for example, NR Positioning Protocol A (NRPPa)/LTE Positioning Protocol (LPP)) message), or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, the synchronization signal, the SSB, the SS/PBCH block, and the like may be interchangeable with each other.

### (Radio Communication Method)

In the present disclosure, the PCI, the target configuration ID, the candidate cell ID, the cell ID, the ID for identifying the cell (first cell), and the like may be interchangeable with each other.

In the present disclosure, the CC, the cell, the area, the BWP, the serving cell, the serving area, and the like may be interchangeable with each other.

The RRC parameter/information element name and the field name of MAC CE/DCI in the present disclosure are merely examples, and are not limited to the examples shown.

The embodiments of the present disclosure can be applied without being limited to the cell-free configuration. In other words, each embodiment of the present disclosure is also applicable to a case where the cell-free configuration is not adopted.

### <First Embodiment>

A first embodiment relates to a target and a rule of the area to be changed.

The UE may connect to a plurality of areas/CCs. The UE may use one PArea and one or more SAreas of the plurality of areas/CCs.

In the present disclosure, connecting to the plurality of areas (second cells)/CCs may be referred to as intra-cell/inter-area CA. In addition, in the present disclosure, connecting to the plurality of cells (first cells)/CCs may be referred to as inter-cell CA.

In the present disclosure, the PArea may be an area in which the same communication method as the communication method in the existing PCell (as defined in up to Rel. 18) is used. In addition, in the present disclosure, the SArea may be an area in which the same communication method as the communication method in the existing SCell (as defined in up to Rel. 18) is used.

In a case where communication is performed using the plurality of areas (inter-area CA), the UE may receive an indication related to a change of at least one of the plurality of areas.

In a case where communication is performed using the plurality of areas (inter-area CA), the UE may receive the indication related to area change in an area corresponding to the indication, or may receive the indication in an area different from the area corresponding to the indication.

### <<Option 1-1>>

The UE may receive the area change indication for each CC.

The area/CC to be changed may be configured/indicated by using the higher layer parameter (RRC parameter)/MAC CE/DCI.

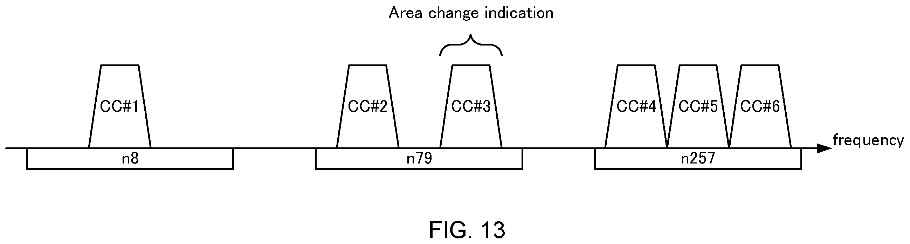

Fig. 13 is a diagram illustrating an example of area change according to option 1-1. In the example illustrated in Fig. 13, a plurality of CCs to which the UE connects are described. In the example illustrated in Fig. 13, the UE connects to CC#1 in band n8, CC#2 and CC#3 in band n79, and CC#4, CC#5, and CC#6 in band n257.

In the example illustrated in Fig. 13, the UE receives the area change indication for each CC. In the example illustrated in Fig. 13, the area related to CC#3 is changed, and the UE receives the indication of the change of that area.

### <<Option 1-2>>

The UE may receive the area change indication corresponding to the plurality of CCs.

The plurality of CCs may be, for example, a plurality of (for example, all or some preset/preindicated) CCs included in a plurality of (for example, all or some preset/preindicated) bands that are preset/preindicated to the UE.

In addition, the plurality of CCs may be, for example, a plurality of (for example, all or some preset/preindicated) CCs included in the same band.

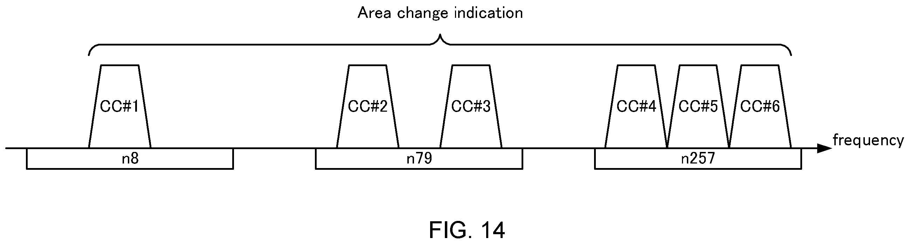

Fig. 14 is a diagram illustrating an example of area change according to option 1-2. In the example illustrated in Fig. 14, since CCs to which the UE connects are the same as those in the above Fig. 13, the description thereof is omitted.

In the example illustrated in Fig. 14, the UE receives the area change indication for all CCs (CC#1 to CC#6) in all bands (n8, n79, and n257).

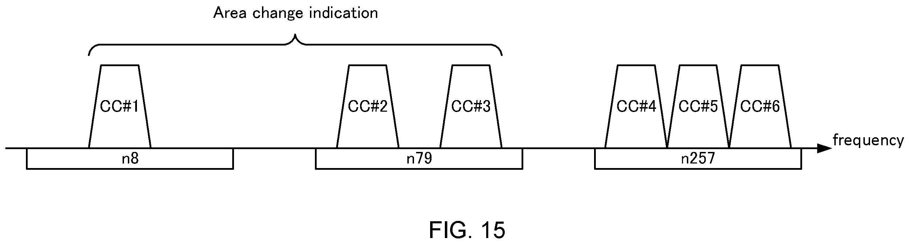

Fig. 15 is a diagram illustrating another example of area change according to option 1-2. In the example illustrated in Fig. 15, since the CCs to which the UE connects are the same as those in Fig. 13 described above, the description thereof is omitted.

In the example illustrated in Fig. 15, the UE receives the area change indication for all CCs (CC#1 to CC#3) in the plurality of bands (n8 and n79).

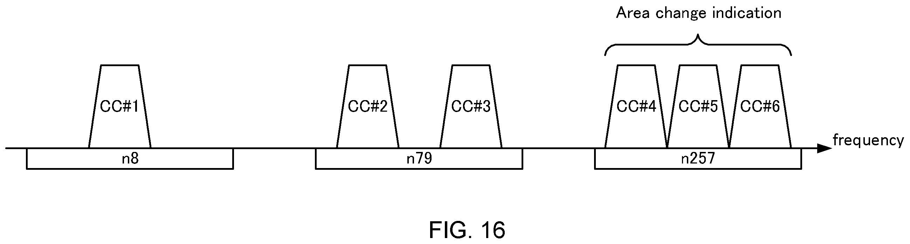

Fig. 16 is a diagram illustrating another example of area change according to option 1-2. In the example illustrated in Fig. 16, since the CCs to which the UE connects are the same as those in the above Fig. 13, the description thereof is omitted.

In the example illustrated in Fig. 16, the UE receives the area change indication for some CCs (CC#4, CC#5 and CC#6) in one band (for example, n257).

In option 1-2, at least one of the plurality of preset/preindicated bands or the plurality of (for example, some preset/preindicated) CCs may be set/indicated by using the higher layer parameter (RRC parameter)/MAC CE/DCI, may be predefined in the specification, may be determined based on reported UE capability information, or may be determined based on a combination thereof.

### <Modification of First Embodiment>

The UE may collectively receive the area change indication for one or more CCs in the same band.

The UE may independently receive the area change indication for each of the CCs in different bands.

The UE may collectively receive the area change indication for one or more CCs included in the same/different bands in a first frequency range (for example, FR1).

The UE may independently receive the area change indication for each of the CCs in the same/different bands in a second frequency range (for example, FR2/FR2-1/FR2-2).

The CC on which area change is indicated/permitted may be set by using the higher layer parameter (RRC parameter), may be predefined in the specification, may be determined based on reported UE capability information, or may be determined based on a combination thereof.

In the area change indication, at least one of the plurality of set areas may be released.

In the area change indication, at least one of the plurality of set areas may be modified.

In the area change indication, a new area may be added.

The release/modification/addition of the area may be performed by using higher layer signaling (for example, RRC/SIB), or the area may be released/modified/added by using the MAC CE/DCI for a set of areas preset by using the RRC.

The added area may be limited to an area corresponding to the same PCI or may be [only] an area corresponding to a different PCI.

The release/modification/addition of the area may be performed for each area, for each cell/PCI, for each TRP, or for each RS (RS setting).

The UE may assume/determine that area change (for example, area release/modification) is not made for an area for a certain application (for example, an area dedicated to CSI/initial access).

As described above, according to the first embodiment, even in a case where communication is performed using the plurality of areas/CCs, the area change indication can be appropriately performed.

### <Second Embodiment>

A second embodiment relates to UE operation after area change.

In a case where a certain area (for example, PArea) is included in a CC related to area change, the UE may determine that setting related to an area other than the certain area (for example, SArea) is released/changed.

In addition, in the case where the certain area (for example, PArea) is included in the CC related to area change, the UE may determine that setting related to at least some or all of the areas other than the certain area (for example, SArea) is maintained.

Hereinafter, the UE operation (option 2-1/2-2) in a case where an area corresponding to the PCI different from the PCI to which the UE currently connects is added when area change is made will be described.

### <<Option 2-1>>

The UE may perform communication using CA with a CC having a different PCI. In this case, the UE may perform cross-carrier scheduling between CCs having different PCIs.

With this configuration, it is possible to perform continuous communication without impairing the communication throughput as compared with a case where a handover operation is performed between the CCs having different PCIs.

### <<Option 2-2>>

The UE may perform communication using CA with a CC having the same PCI.

### <<<Option 2-2-1>>>

The UE may assume that area change is made within the same PCI.

In area change, the UE may not assume that an area corresponding to a different PCI is included in the changed area.

### <<<Option 2-2-2>>>

The UE may assume that [an area corresponding to] a different PCI is in a deactivated state.

The UE may receive an RRC parameter indicating a state of the cell (for example, sCellstate), or the state of the cell may be indicated by using the MAC CE (for example, SArea deactivation MAC CE)/DCI.

### <<<Option 2-2-3>>>

The UE may assume that [an area corresponding to] a different PCI is [a candidate area corresponding to] a PCI of the candidate cell.

### <<< Variation of Option 2-2 >>>

[In a case where a set/list of the plurality of CCs is set for the UE by using higher layer signaling,] when the UE receives the area change indication for one CC/BWP included in the CC set/list, the UE may determine that the area change is made in a plurality of (for example, all) CC/BWPs included in the set/list.

In addition, in a case where the UE receives the area change indication for one CC/BWP included in a certain band/frequency range, the UE may determine that the area change is made in a plurality of (for example, all) CCs/BWPs included in the CC set/list.

In addition, in a case where the UE receives the area change indication for one CC/BWP included in the CC set/band/frequency range, the UE may determine that the area change is made in a certain CC/BWP.

The certain CC/BWP may be, for example, a plurality of (for example, all) CC/BWPs corresponding to the same PCI as the PCI of the CC/BWP corresponding to the area change indication among the plurality of (for example, all) CC/BWPs included in the same CC set/band/frequency range.

At least one operation described in the second embodiment may be set by using the higher layer parameter, may be predefined in the specification, may be determined based on reported UE capability information, or may be determined based on a combination thereof.

As described above, according to the second embodiment, the UE operation after area change can be appropriately defined.

### <Supplement>

### <<Notification of Information to UE>>

The notification of any information to the UE (from a network (NW) (for example, a base station (BS))) (in other words, reception of any information from the BS at the UE) in the above embodiments may be performed by using physical layer signaling (for example, DCI), higher layer signaling (for example, RRC signaling, MAC CE), a certain signal/channel (for example, PDCCH, PDSCH, reference signal), or a combination thereof.

In a case where notification is performed by the MAC CE, the MAC CE may be identified by including, in a MAC subheader, a new logical channel ID (LCID) not defined in existing standards.

In a case where the notification is performed using DCI, the notification may be performed by a certain field of the DCI, a radio network temporary identifier (RNTI) used for scrambling of cyclic redundancy check (CRC) bits added to the DCI, a format of the DCI, or the like.

In addition, the notification of any information to the UE in the above-described embodiments may be performed periodically, semi-persistently, or aperiodically.

### <<Notification of Information from UE>>

The notification of any information from the UE (to the NW) (in other words, transmission/reporting of any information to the BS by the UE) in the above-described embodiments may be performed using physical layer signaling (for example, UCI), higher layer signaling (for example, RRC signaling, MAC CE), a certain signal/channel (for example, PUCCH, PUSCH, PRACH, or reference signal), or a combination thereof.

In a case where the notification is performed by the MAC CE, the MAC CE may be identified by including, in a MAC subheader, a new LCID not defined in existing standards.

In a case where notification is performed by the UCI, the notification may be transmitted using the PUCCH or PUSCH.

In addition, the notification of any information from the UE in the above-described embodiments may be performed periodically, semi-persistently, or aperiodically.

### <<Regarding Application of Each Embodiment>>

In the UE/BS, a certain processing/operation/control/assumption/information (one or more thereof) regarding at least one of the above-described embodiments may be applied (or used) when any one or a plurality of the following conditions are satisfied:
· A higher layer parameter indicating the certain processing/operation/control/assumption/information is configured.
· The certain processing/operation/control/assumption/information is determined based on the associated higher layer parameter.
· The certain processing/operation/control/assumption/information is specified/activated/triggered by MAC CE/DCI/UCI/resource/channel/RS.
· A certain UE capability indicating (or relating to) the certain processing/operation/control/assumption/information is reported or supported.
· The application of the certain processing/operation/control/assumption/information is determined based on certain conditions.

The certain UE capability may indicate at least one of the following:
· Support for the above certain processing/operation/control/assumption/information.
· Support for inter-area CA.

Furthermore, the certain UE capability may be a capability applied over all the frequencies (in common irrespective of frequency), may be a capability for each frequency (for example, one of a cell, a band, a band combination, a BWP, a component carrier, and the like or a combination thereof), may be a capability for each frequency range (for example, frequency range 1 (FR1), FR2, FR3, FR4, FR5, FR2-1, and FR2-2), may be a capability for each subcarrier spacing (SCS), or may be a capability for each feature set (FS) or feature set per component-carrier (FSPC).

In addition, the certain UE capability may be capability applied across all the duplex schemes (in common irrespective of duplex scheme) or may be a capability for each duplex scheme (for example, time division duplex (TDD) and frequency division duplex (FDD)).

The UE/BS may follow the operation defined in the existing 3GPP release if the above-described condition is not satisfied.

### (Supplementary Notes)

Regarding an embodiment of the present disclosure, the following supplementary notes of the invention will be given.

### (Supplementary Note 1)

A terminal including: a receiving section that receives one or more change indications for a cell whose physical range is changed; and a control section that controls transmission and reception of a signal using a plurality of the cells based on the change indication.

### (Supplementary Note 2)

The terminal according to Supplementary Note 1, wherein one change indication corresponds to the one cell, or one change indication corresponds to the plurality of cells.

### (Supplementary Note 3)

The terminal according to Supplementary Note 1 or 2, wherein, in a case where the change indication indicates a change of a certain cell, the control section releases a setting of a cell other than the certain cell.

### (Supplementary Note 4)

The terminal according to any one of Supplementary Notes 1 to 3, wherein, in a case where a cell of a second physical cell identifier (PCI) different from a first PCI corresponding to a connected cell is added by the change indication, the control section controls transmission and reception of the signal using a cell corresponding to the first PCI and a cell corresponding to the second PCI.

### (Radio Communication System)

Hereinafter, a configuration of a radio communication system according to an embodiment of the present disclosure will be described. In this radio communication system, communication is performed using any one of the radio communication methods according to the embodiments of the present disclosure or a combination thereof.

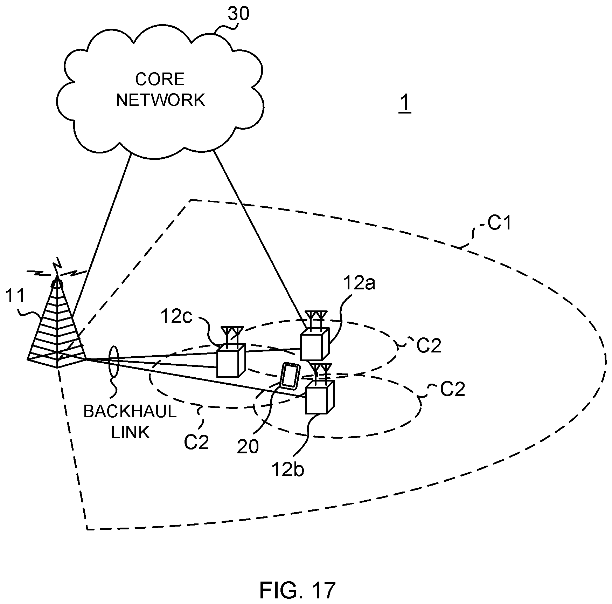

Fig. 17 is a diagram illustrating an example of a schematic configuration of a radio communication system according to an embodiment. A radio communication system 1 (which may be simply referred to as a system 1) may be a system that implements communication using long term evolution (LTE), 5th generation mobile communication system New Radio (5G NR), and the like defined by third generation partnership project (3GPP).

Further, the radio communication system 1 may support dual connectivity between multiple radio access technologies (RATs) (Multi-RAT Dual Connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 having a relatively wide coverage, and base stations 12 (12a to 12c) that are arranged in the macro cell C1 and form a small cell C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as a "base station 10" in a case where the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber in compliance with common public radio interface (CPRI), an X2 interface, or the like) or in a radio manner (for example, NR communication). For example, in a case where NR communication is used as a backhaul between the base stations 11 and 12, the base station 11 corresponding to an upper node may be referred to as an Integrated Access Backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), or the like may be used as downlink channels.

Furthermore, in the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource for searching for DCI. The search space corresponds to a search area and a search method for PDCCH candidates. One CORESET may be associated with one or more search spaces. The UE may monitor a CORESET associated with a certain search space based on a search space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). It is noted that DMRSs may be referred to as "user terminal-specific reference signals (UE-specific reference signals)".

### (Base Station)

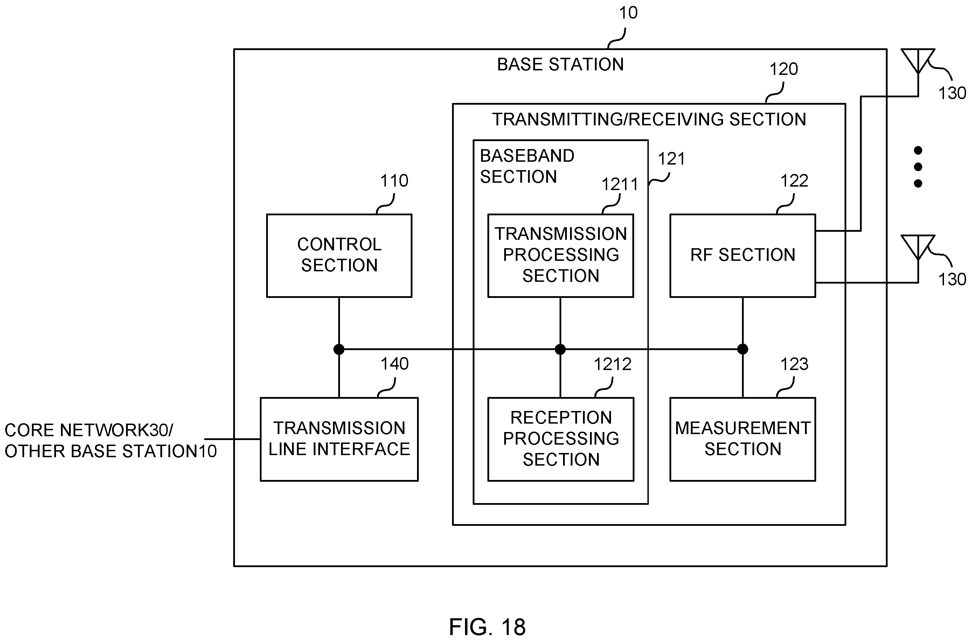

Fig. 18 is a diagram illustrating an example of a configuration of the base station according to an embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, or the like, which is described based on common recognition in a technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmitting/receiving circuit, and the like described on the basis of common general knowledge in the technical field according to the present disclosure.

The transmitting/receiving section 120 may be configured as an integrated transmitting/receiving section, or may be configured as a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-to-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply, to the acquired baseband signal, reception processing such as analog-to-digital conversion, fast Fourier transform (FFT) processing, inverse discrete Fourier transform (IDFT) processing (as necessary), filtering processing, demapping, demodulation, decoding (which may include error correction decoding), MAC layer processing, RLC layer processing, and PDCP layer processing, and may acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus (for example, a network node providing the NF) included in the core network 30, another base station 10, and the like, and may acquire, transmit, and perform other processing on user data (user plane data), control plane data, and the like for the user terminal 20.

It is noted that the transmitting section and the receiving section of the base station 10 in the present disclosure may include at least one of the transmitting/receiving section 120, the transmitting/receiving antenna 130, and the transmission line interface 140.

The transmitting/receiving section 120 may transmit a radio resource control (RRC) configuration related to a cell whose physical range is changed. The control section 110 may indicate the handover operation among the plurality of cells using the RRC configuration (zeroth embodiment).

The transmitting/receiving section 120 may transmit trigger information regarding the handover. The control section 110 may indicate at least one of uplink synchronization and downlink synchronization for a cell whose physical range is changed by using the trigger information (first/fourth embodiments).

The transmitting/receiving section 120 may transmit one or more change indications for a cell whose physical range is changed. The control section 110 may indicate transmission and reception of a signal using the plurality of cells by using the change indication (first embodiment).

### (User Terminal)

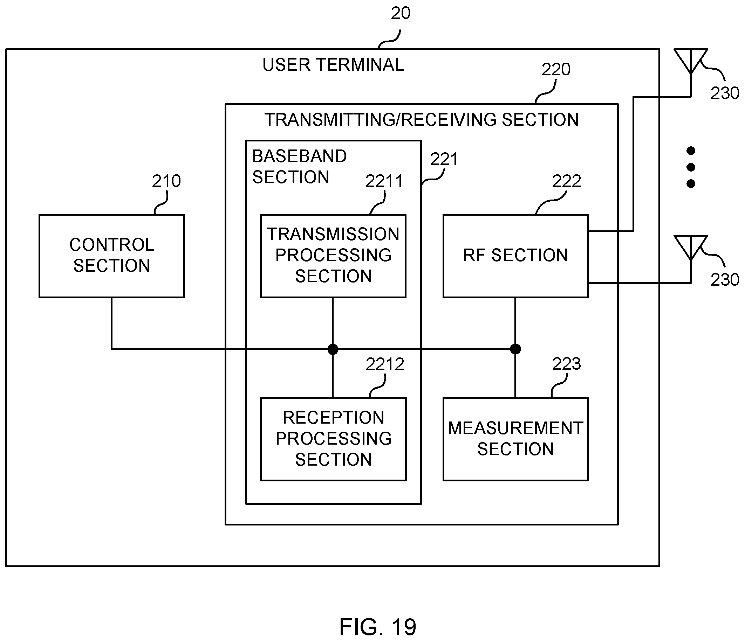

Fig. 19 is a diagram illustrating an example of a configuration of the user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. In a case where transform precoding is enabled for a certain channel (for example, PUSCH), the transmitting/receiving section 220 (transmission processing section 2211) may perform the DFT processing as the transmission processing to transmit the channel using a DFT-s-OFDM waveform, and otherwise, may omit the DFT processing in the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply, to the acquired baseband signal, reception processing such as analog-to-digital conversion, FFT processing, IDFT processing (as necessary), filtering processing, demapping, demodulation, decoding (which may include error correction decoding), MAC layer processing, RLC layer processing, PDCP layer processing, and the like, and may acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

It is noted that the measurement section 223 may derive channel measurement for CSI computation, based on a channel measurement resource. The channel measurement resource may be, for example, a non zero power (NZP) CSI-RS resource. In addition, the measurement section 223 may derive interference measurement for CSI computation, based on an interference measurement resource. The interference measurement resource may be at least one of an NZP CSI-RS resource for interference measurement, a CSI-interference measurement (IM) resource, or the like. It is noted that the CSI-IM may be referred to as CSI-interference management (IM), and may be interchangeable with a zero power (ZP) CSI-RS. It is noted that, in the present disclosure, CSI-RS, NZP CSI-RS, ZP CSI-RS, CSI-IM, CSI-SSB, and the like may be interchangeable with each other.

It is noted that the transmitting section and the receiving section of the user terminal 20 in the present disclosure may include at least one of the transmitting/receiving section 220 and the transmitting/receiving antenna 230.

The transmitting/receiving section 220 may receive one or more change indications for a cell whose physical range is changed. The control section 210 may control transmission and reception of a signal using the plurality of cells based on the change indication (first embodiment).

One change indication may correspond to the one cell, or one change indication may correspond to the plurality of cells (first embodiment).

In a case where the change indication indicates a change of a certain cell, the control section 210 may release a setting of a cell other than the certain cell (second embodiment).

In a case where a cell of a second physical cell identifier (PCI) different from a first PCI corresponding to a connected cell is added by the change indication, the control section 210 may control transmission and reception of the signal using a cell corresponding to the first PCI and a cell corresponding to the second PCI (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

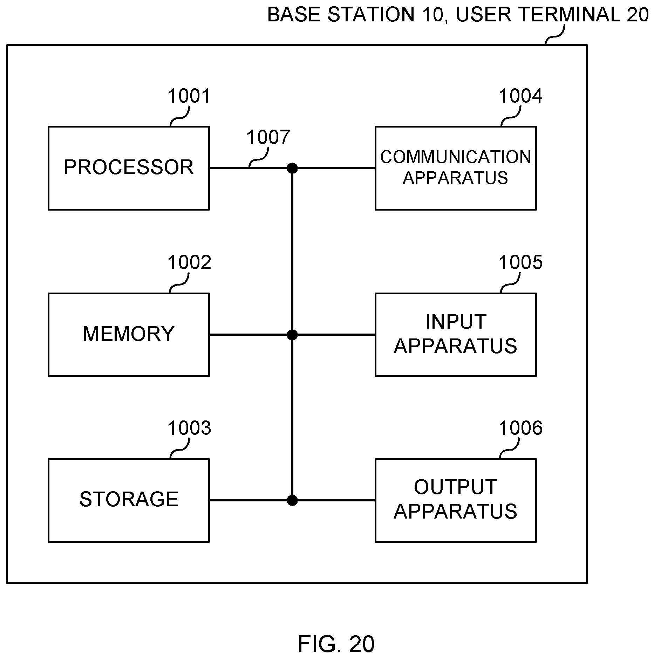

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

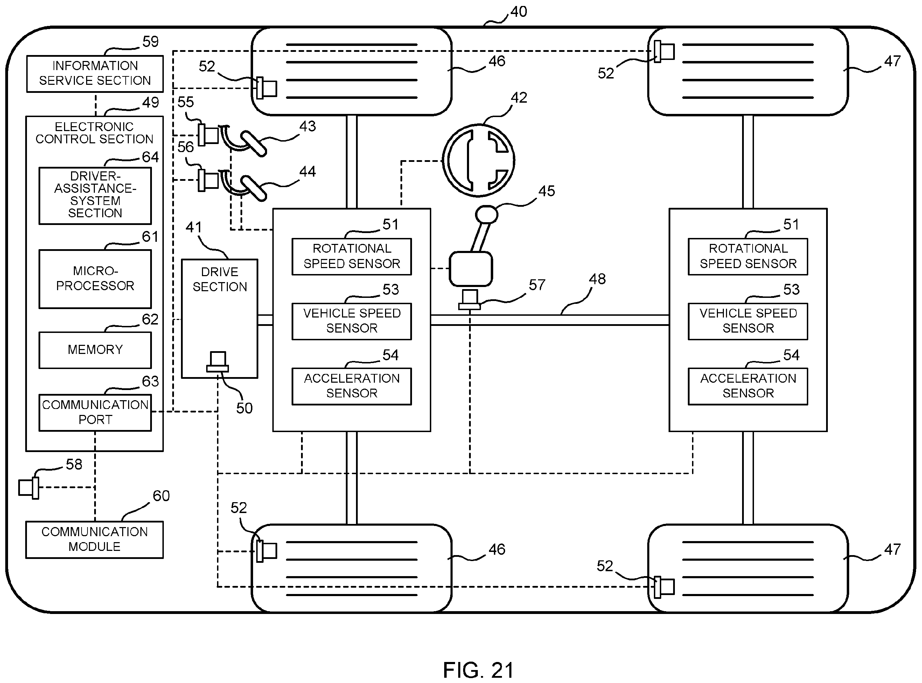

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, gerunds, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure.

## Claims

1. A terminal comprising:
a receiving section that receives one or more change indications for a cell whose physical range is changed; and a control section that controls transmission and reception of a signal using a plurality of the cells based on the change indication.

2. The terminal according to Claim 1, wherein one change indication corresponds to the one cell, or one change indication corresponds to the plurality of cells.

3. The terminal according to Claim 1, wherein, in a case where the change indication indicates a change of a certain cell, the control section releases a setting of a cell other than the certain cell.

4. The terminal according to Claim 1, wherein, in a case where a cell of a second physical cell identifier (PCI) different from a first PCI corresponding to a connected cell is added by the change indication, the control section controls transmission and reception of the signal using a cell corresponding to the first PCI and a cell corresponding to the second PCI.

5. A radio communication method for a terminal, the method comprising:
a step of receiving one or more change indications for a cell whose physical range is changed; and a step of controlling transmission and reception of a signal using a plurality of the cells based on the change indication.

6. A base station comprising:
a transmitting section that transmits one or more change indications for a cell whose physical range is changed; and a control section that indicates transmission and reception of a signal using a plurality of the cells by using the change indication.
